# EUROPÄISCHE PATENTANMELDUNG

(11) **EP 0 894 692 A1**
(43) Veröffentlichungstag der Anmeldung: **03.02.1999**
(21) Anmeldenummer: 98113934.8
(22) Anmeldetag: 24.07.1998
(51) Int. Cl.: B62B 3/14

(54) **Einrichtung zum Einkaufen von Ware**

(30) Priorität: 29.07.1997 DE 19732638
(71) Anmelder: Wanzl GmbH & Co. Entwicklungs-KG, D-89336 Leipheim (DE)
(72) Erfinder: Wanzl, Rudolf, 89340 Leipheim (DE)

(57) **Zusammenfassung**

Die Erfindung betrifft eine Einrichtung zum Einkaufen von Ware, mit einem mit gleichen Wagen stapelbaren Einkaufswagen (2), der ein mit einem Steckteil (5) ausgestattetes Pfandschloß (4) trägt, das einen Schacht (9) zur Aufnahme des Steckteiles (5) eines weiteren Einkaufswagens (2) aufweist, mit einem Handscanner (11) zum Abrechnen der eingekauften Ware und mit einer Haltevorrichtung (10), die zum Tragen des Handscanners (11) vorgesehen ist.
Es ist vorgesehen, die Haltevorrichtung (10) durch den Schacht (9) des Pfandschlosses (4) zu bilden.

## Beschreibung

Die Erfindung betrifft eine Einrichtung zum Einkaufen von Ware, mit einem mit gleichen Wagen stapelbaren Einkaufswagen, der ein mit einem Steckteil ausgestattetes Pfandschloß trägt, das einen Schacht zur Aufnahme des Steckteiles eines weiteren Einkaufswagens aufweist, mit einem Handscanner zum Abrechnen der eingekauften Ware und mit einer Haltevorrichtung, die zum Tragen des Handscanners vorgesehen ist.

Bei einer bekannten Einrichtung ist die Haltevorrichtung für den Handscanner durch einen aus Kunststoff bestehenden, am Schiebegriff des Einkaufswagens angeordneten Halter gebildet, der eine Vertiefung aufweist, in welche der Handscanner mit seinem Schaftende voraus einsetzbar ist. Es ist von Nachteil, daß zum Abstellen des Handscanners ein separates Teil erforderlich ist, denn dieses Teil verteuert die Herstellung der Einrichtung.

Es ist Aufgabe der Erfindung, eine Einrichtung der hier vorliegenden Art so zu vereinfachen, daß auf eine separate Haltevorrichtung verzichtet werden kann.

Die Lösung der Aufgabe besteht darin, daß die Haltevorrichtung durch den Schacht des Pfandschlosses gebildet ist.

Die erfinderische Idee zeichnet sich durch verblüffende Einfachheit aus, denn an jedem Pfandschloß befindet sich ohnehin ein Schacht zur Aufnahme des Steckteiles des Pfandschlosses eines weiteren Transportwagens. Im Schacht steckt ein Steckteil dann, wenn mit Hilfe des Pfandschlosses zwei oder mehrere Einkaufswagen platzsparend aneinandergekoppelt sind. In diesem Zustand befinden sich die Einkaufswagen in einem Abstellbereich und stehen bereit, um zur Durchführung des Einkaufsvorganges abgekoppelt zu werden. Im abgekoppelten Zustand befindet sich kein Steckteil im Schacht des Pfandschlosses. Zum Einkaufen wird dem Kunden leihweise ein Handscanner zur Verfügung gestellt. Die Erfindung nutzt nun in äußerst zweckmäßiger Weise das Vorhandensein des freien Schachtes des Pfandschlosses, denn am Handscanner braucht nur ein Vorsprung in Form des Steckschaftes des Steckteiles angeordnet zu sein, um den Handscanner mit Hilfe des Steckschaftes, der in den Schacht eingesteckt wird, am Pfandschloß abnehmbar befestigen zu können. Natürlich ist der Vorsprung am Handscanner nur so ausgebildet, daß der Vorsprung wohl in den Schacht einsteckbar ist, jedoch nicht dadurch das zuvor entrichtete und im Pfandschloß befindliche Pfand (Münze, Karte oder dergleichen) ausgelöst werden kann.

Die Erfindung wird anhand eines Ausführungsbeispieles näher erläutert. Es zeigt
- Fig. 1: eine Einrichtung bestehend aus Einkaufswagen, Pfandschloß und Handscanner sowie
- Fig. 2: im Detail den in das Pfandschloß eingesteckten Handscanner.

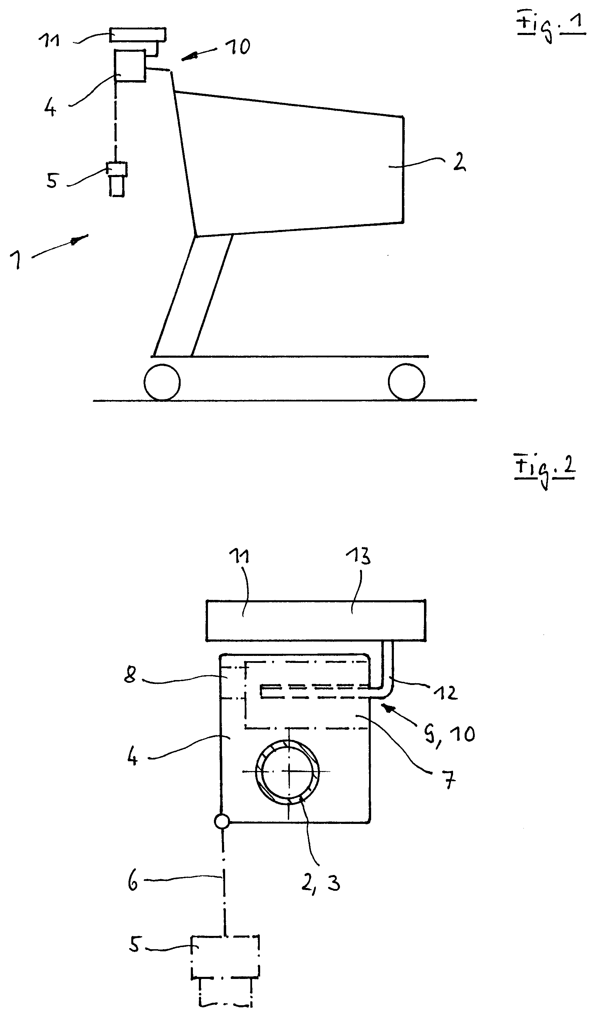

Fig. 1 zeigt eine Einrichtung 1, bestehend aus einem Einkaufswagen 2, einem Pfandschloß 4 und einem Handscanner 11. Der Einkaufswagen 2 entspricht jenen Einkaufswagen 2, die in SB-Märkten Verwendung finden. Der Einkaufswagen 2 ist in bekannter Weise so gestaltet, daß er sich mit gleichen Wagen 2 platzsparend und in Reihen stapeln läßt. Der Einkaufswagen 2 trägt ein mit einem Steckteil 5 ausgestattetes Pfandschloß 4. Mit Hilfe des Steckteiles 5 lassen sich mit gleichen Pfandschlössern 4 ausgestattete Einkaufswagen 2 an eine Reihe gestapelter Einkaufswagen 2 ankoppeln oder durch Entrichtung eines Pfandes von der Reihe abkoppeln. Dies ist ebenfalls bekannt. Bekannt ist schließlich auch das Verwenden von Handscannern 11 beim Einkaufsvorgang. Der Einkaufswagen 2 ist deshalb mit einer Haltevorrichtung 10 ausgestattet, durch die es möglich ist, den Handscanner 11 am Einkaufswagen 2 dann abzustellen, wenn er gerade nicht zur Preiserfassung der eingekauften Ware benötigt wird. Im Beispiel ist der Handscanner 11 an der Haltevorrichtung 10 angeordnet.

Im Detail zeigt Fig. 2 das Pfandschloß 4, das den Handscanner 11 trägt. Das mit dem Steckteil 5 ausgestattete Pfandschloß 4 ist beispielsweise an der Schiebeeinrichtung 3 des Einkaufswagens 2 befestigt. Das an einer Kette 6 angeordnete und mit dem Gehäuse des Pfandschlosses 4 verbundene Steckteil 5 ist nicht benutzt und hängt nach unten. Das Pfandschloß 4 ist mit einer lediglich strichpunktiert angedeuteten Kopplungsmechanik 7 und mit einer ebenfalls nur angedeuteten Pfandaufnahmeeinrichtung 8 ausgestattet. Derartige Pfandschlösser 4 sind hinreichend bekannt und brauchen hier nicht erneut beschrieben zu werden. Wie alle bekannten Pfandschlösser 4 besitzt auch das hier dargestellte Pfandschloß 4 einen Schacht 9, der zur Aufnahme des Steckteiles 5 eines weiteren Einkaufswagens 2 dann bestimmt ist, wenn es gilt, zwei Einkaufswagen 2 an einem Abstellbereich für Einkaufswagen 2 aneinander zu koppeln. Der Handscanner 11 trägt an seiner Unterseite einen Vorsprung 12, dessen Form und Querschnitt so gewählt ist, daß er in den als Haltevorrichtung 10 bestimmten Schacht 9 des Pfandschlosses 4 eingesteckt werden kann, ohne eine Ausgabe des im Pfandschloß 4 befindlichen Pfandes zu bewirken. In der Zeichnung erkennt man den im Schacht 9 befindlichen Vorsprung 12 des Handscanners 11. Zum Benutzen des Handscanners 11 braucht dieser nur mit seinem Vorsprung 12 (in der Zeichnung nach rechts) aus dem Schacht 9 herausgezogen zu werden. Bei Nichtgebrauch steckt man den Handscanner 11 mit dem Vorsprung 12 voraus wieder in den Schacht 9, so daß der Handscanner 11 sicher und dennoch leicht abnehmbar vom Pfandschloß 4 getragen wird. Es ist vorteilhaft, den Vorsprung 12 am Gehäuse 13 des Handscanners 11 so anzuordnen und erforderlichenfalls den Verlauf des Schachtes 9 am Pfandschloß 4 so zu wählen, daß der an der Haltevorrichtung 10 befindliche Handscanner 11 in Schieberichtung des Einkaufswagen 2 leicht ansteigt.

## Patentansprüche

1. Einrichtung zum Einkaufen von Ware, mit einem mit gleichen Wagen stapelbaren Einkaufswagen (2), der ein mit einem Steckteil (5) ausgestattetes Pfandschloß (4) trägt, das einen Schacht (9) zur Aufnahme des Steckteiles (5) eines weiteren Einkaufswagens (2) aufweist, mit einem Handscanner (11) zum Abrechnen der eingekauften Ware und mit einer Haltevorrichtung (10), die zum Tragen des Handscanners (11) vorgesehen ist, dadurch **gekennzeichnet,** daß die Haltevorrichtung (10) durch den Schacht (9) des Pfandschlosses (4) gebildet ist.

2. Einrichtung nach Anspruch 1, dadurch **gekennzeichnet,** daß am Handscanner (11) ein Vorsprung (12) angeordnet ist, der zum Einstecken in den Schacht (9) bestimmt ist.

3. Einrichtung nach Anspruch 1, dadurch **gekennzeichnet,** daß der Handscanner (11) in auf der Halteeinrichtung (10) aufgestecktem Zustand in Schieberichtung des Einkaufswagens (2) ansteigend angeordnet ist.

4. Einrichtung nach einem der Ansprüche 1 bis 3, dadurch **gekennzeichnet,** daß der Vorsprung (12) so gestaltet ist, daß er nicht zum Auslösen des im Pfandschloß (4) befindlichen Pfandes geeignet ist.
